# EUROPEAN PATENT APPLICATION

(11) **EP 3 945 474 A1**
(43) Date of publication of application: **02.02.2022**
(21) Application number: 20188135.6
(22) Date of filing: 28.07.2020
(51) Int. Cl.: G06Q 10/00

(54) **A DECISION SUPPORT SYSTEM AND METHOD THEREOF**

(71) Applicant: Yoon, Seong Min, Gyeonggido 11940 (KR)
(72) Inventor: Yoon, Seong Min, Gyeonggido 11940 (KR)
(74) Representative: Cabinet Chaillot

(57) **Abstract**

The present invention relates to a decision support system and a method thereof. The present invention relates to a decision support system and method. More specifically, the present invention is intended to optimize the cost, properly selection of business executor, and quality of outcomes of a business execution, and includes the following process. First, the cost input items of the business execution are selected based on the opinions suggested by general participants. Subsequently, a supporter group consisting of experts in the field of the business execution provides opinions and detailed description about the selected cost input items. Subsequently, the cost input item is finally determined by collecting opinions of general participants based on the business execution information, opinions and detailed descriptions of the cost input items for the business execution provided by the supporter group.

## Description

### BACKGROUND OF THE INVENTION

### Field of the Invention

The present invention relates to a decision support system and method. More specifically, the present invention is intended to optimize the cost, properly selection of business executor, and quality of outcomes of a business execution, and includes the following process. First, the cost input items of the business execution are selected based on the opinions suggested by general participants. Subsequently, a supporter group consisting of experts in the field of the business execution provides opinions and detailed description about the selected cost input items. Subsequently, the cost input item is finally determined by collecting opinions of general participants based on the business execution information, opinions and detailed descriptions of the cost input items for the business execution provided by the supporter group.

In addition, with regard to the budget allocation for each item of the determined cost input item, a supporter group consisting of experts in the field provides opinions and detailed knowledge about the budget allocation. Subsequently, based on the information on the cost input item, the opinion on the budget allocation provided by the supporter group, and the detailed description, opinions of general participants are collected to finally determine the budget allocation on each item of the cost input item.

In addition, with regard to the selection of the business execution company to execute the business of the determined cost input item, general participants are free to propose suitable business execution company information. A supporter group consisting of experts in the field provides opinions and detailed description on the selection of the business execution company. The selection of the business execution company is finally decided by collecting the opinions of the general participants based the opinions and detailed knowledge on the business execution company selection provided by the supporter group.

### Description of the Related Art

Existing opinion surveys, question surveys, or decision methods are conducted while numerical values are presented by majority rule against subjects and sufficient information required for the investigation is not received, and thus, it is general that the subjects depend on passive and improvisational responses without receiving a thinking time or information to be considered in decision. Therefore, the results are often derived as the intention of the survey agency. As an invention that makes decisions by utilizing expert opinions, In Korean Patent No. 10-1170290(Registered on July 25, 2012), there is published an electronic evaluation system for technology development business using the evaluation information of an expert evaluator input online. The above patented invention is an invention having the following configurations. A technical development business electronic evaluation system using the evaluation information of a specialized appraiser and method are provided to objectively and rapidly evaluate technical development businesses by enabling an expert who includes reliability and expertise to input evaluation information to the online. A business applicant terminal applies technical development support to the online. The application information is transmitted to an unified information system. A plurality of evaluation committee terminals controls a technical development business evaluation system in order to transmit evaluation information to a comprehensive business management system. The comprehensive business management system stores information for technical development businesses.

However, the above-mentioned patented invention is a decision system and method that utilizes experts to allow multiple evaluation members to perform evaluations related to technology development businesses. There is a problem that the result of the decision loses the objectivity because it cannot prevent the subjectivity and dedication of the experts.

Therefore, in a specific business execution requiring cost investment, an invention that can optimize the cost, execution and quality of results of the specific business execution by providing the following configuration is desired.
First, the cost input items of the business execution are selected based on the opinions suggested by general participants. Subsequently, a supporter group consisting of experts in the field of the business execution provides opinions and detailed description about the selected cost input items. Subsequently, the cost input item is finally determined by collecting opinions of general participants based on the business execution information, opinions and detailed descriptions of the cost input items for the business execution provided by the supporter group.
In addition, with regard to the budget allocation for each item of the determined cost input item, a supporter group consisting of experts in the field provides opinions and detailed knowledge about the budget allocation. Subsequently, based on the information on the cost input item, the opinion on the budget allocation provided by the supporter group, and the detailed description, opinions of general participants are collected to finally determine the budget allocation on each item of the cost input item.

In addition, with regard to the selection of the business execution company to execute the business of the determined cost input item, general participants are free to propose suitable business execution company information. A supporter group consisting of experts in the field provides opinions and detailed description on the selection of the business execution company. The selection of the business execution company is finally decided by collecting the opinions of the general participants based the opinions and detailed knowledge on the business execution company selection provided by the supporter group.

### SUMMARY OF THE INVENTION

The present invention has been made in an effort to provide a decision support system and method thereof capable of optimizing the investment and the budget allocations in business execution. In addition, the present invention has been made in an effort to provide a decision support system and method thereof capable of obtaining the quality of results of the specific business execution.
According to a first aspect of the present invention, a system for a decision support including a management computer and a support computer including at least one hardware processor, and a memory storing instructions that, when executed by the at least one processor, cause the system to perform: providing, by the management computer, a proposed issue information related to a business execution to the support computer, and requesting a decision regarding the issue; providing, by the support computer, the issue information to at least one expert terminal, and requesting expert opinions regarding the issue; receiving, by the support computer, expert opinions of agreement and opposition opinion and detailed knowledge on the issue transmitted from at least on expert terminal; providing, by the support computer, the expert opinions and a reference information for consent and non-consent opinion and scoring on the expert opinions to at least one participant terminal, and requesting opinions of participants; receiving, by the support computer, opinions of participants including consent and non-consent opinion and scores given from at least one participant terminal, and performing a decision on the issue based on the opinions of participants; receiving, by management computer, the decision on the issue from the support computer.

According to a second aspect of the present invention, a decision support method comprising: providing, by the management computer, a proposed issue information related to a business execution to the support computer, and requesting a decision regarding the issue; providing, by the support computer, the issue information to at least one expert terminal, and requesting expert opinions regarding the issue; receiving, by the support computer, expert opinions of agreement and opposition opinion and detailed knowledge on the issue transmitted from at least on expert terminal; providing, by the support computer, the expert opinions and a reference information for consent and non-consent opinion and scoring on the expert opinions to at least one participant terminal, and requesting opinions of participants; receiving, by the support computer, opinions of participants including consent and non-consent opinion and scores given from at least one participant terminal, and performing a decision on the issue based on the opinions of participants; receiving, by management computer, the decision on the issue from the support computer.

According to the present invention, first, among the various items related to business execution, items to be intensively invested in cost can be selected by collecting opinions of general participants freely without relying only on the decisions of the business entity or some experts, and it can be decided by collecting various opinions of general participants who are provided with expert opinions and knowledge.

Second, the allocation of the cost (budget) to be inputted can also be determined for each item of the concentrated cost input items determined by collecting various opinions of general participants who have received expert opinions and knowledge.

Third, in selecting a person or company (hereinafter referred to as a 'business executor' or 'business executor') who will be in charge of the business execution of the determined cost input item, the participants' free opinions are collected and selected. In this regard, various opinions of general participants who have been provided with expert opinions and knowledge can be collected and decided.

As a result, the present invention has an effect of pursuing optimization of specific business execution by performing the above process.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a schematic configuration diagram of an exemplary embodiment of a decision support system of the present invention;
FIG. 2 is a schematic configuration diagram of an example of a management computer which is a main part in the exemplary embodiment of the decision support system of the present invention;
FIG. 3 is a schematic configuration diagram of an example of a support computer which is a main part in the exemplary embodiment of the decision support system of the present invention;
FIG. 4 is an exemplary view for explaining the result of the decision by the support computer, which is a main part of the decision support system of the present invention.
FIG. 5 is a flowchart illustrating an embodiment of the decision support method of the present invention.
FIG. 6 is a flowchart illustrating another embodiment of the decision support method of the present invention.
FIG. 7 is a flowchart illustrating another embodiment of the decision support method of the present invention.
FIG. 8 is a flowchart illustrating another embodiment of the decision support method of the present invention.
FIG. 9 is a flowchart illustrating another embodiment of the decision support method of the present invention.
FIG. 10 is a flowchart illustrating another embodiment of the decision support method of the present invention.

### DETAILED DESCRIPTION OF THE PREFERRED EMBODIMENT

Hereinafter, exemplary embodiments of the present invention will be described in detail with reference to the accompanying drawings.

For convenience of the description of the exemplary embodiments of the present invention, among terms used in the description of the exemplary embodiments of the present invention to be described below, configurations of the present invention may refer to configurations of hardware itself and also refer to configurations of a web program or computer program executed by using the hardware resources. For example, a management computer among the configurations of the present invention may be computer hardware itself and/or can be described as a set of each component consisting of a web program or a computer program executed by utilizing the hardware resources of the computer.

In addition, the management computer and the support computer of the present invention is provided with a communication means, and may be configured as a server computer capable of data communication by being connected to various terminals and a database server. In addition, the management participant terminal, the investor terminal, the purchase contractor terminal, the business executor terminal, the supporter terminal, and the support participant terminal of the present invention output or execute a web program or application program, and be connected to the management computer or support computer through communication means. It can be configured as a terminal.

In addition, the management content storage unit and the support content storage unit of the present invention may be configured as storage computers included in the management computer and the support computer, respectively, or as separate computers or database servers accessed using communication means.

In addition, the hardware configuration of the computer and the terminal of the present invention includes at least one processor and memory, and the memory stores a web program or computer program for decision and decision support of the present invention, and the at least One processor is configured to execute the web program or computer program stored in the memory as desired by an embodiment of the present invention.

Therefore, for example used in the description of the embodiment of the present invention, '∼ unit' , '∼ means ', ∼ unit' or '∼ module' is mainly a component of a web program or computer program stored in the memory.

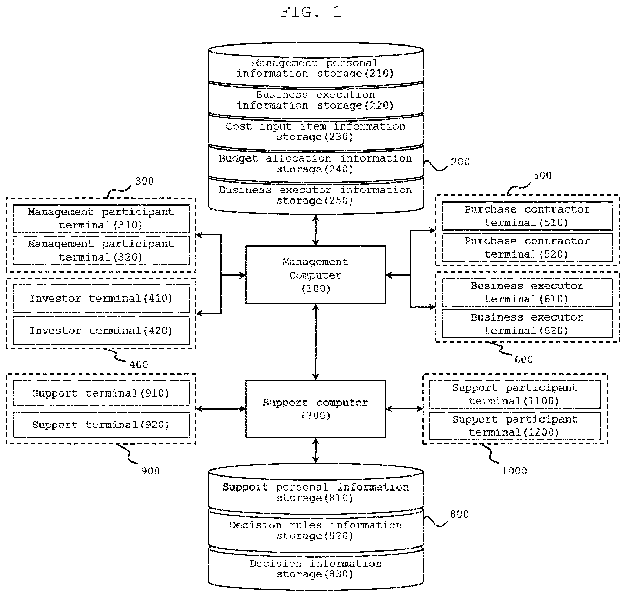

FIG. 1 is a schematic configuration diagram of an exemplary embodiment of a decision support system of the present invention. As illustrated in FIG. 1, the decision system of the present invention is a configuration including: a management computer 100 for performing a decision related to various items for business execution, cost input items, budget allocation by items, selection of business executors by the cost input items and profit distribution of result of business execution, and managing the business execution according to the decision; a management content storage unit 200 that is included in the management computer or connected to the management computer(100) in a communication means, and includes a management personal information storage unit 210 for storing members information registered to the management computer, a business execution information storage unit 220 storing proposed business information and selected business execution information, a cost input item information storage unit 230 storing information of selection and decision of the cost input item related to the business execution, a budget allocation information storage unit 240 storing a budget allocation information by each of item related to determined cost input items, a business executor information unit 250 storing business executor information that executes business by each of item; a management participant group 300 including at least one management participant terminal of management participants who suggest business items and provide opinions related to business execution to the management computer; an investor group 400 including at least one investor terminal 410 and 420 that is communicatively connected to the management computer 100 and used by investors performing various types of investment related to business execution; a purchase reservation group 500 including at least one purchase reservation terminal 510 and 520 used by at least one purchase reservation who is connected to the management computer 100 and is reserved or contracted to purchase a result of business execution; a business executor group 600 including at least one business executor terminals 610 and 620 used by business executors determined to execute business for each item of business execution; a support computer 700 receiving a request for decision related to business execution from the management computer, performing the decision related to business execution in response to the request, and providing the decision information determined to the management computer; a support content storage unit 800 that is included in the support computer 700 or connected to the support computer 700 in a communication means, and includes a support personal information storage unit 810 for storing information of expert and participant members registered to the support computer 700, a decision rule information storage unit 820 storing required rules of the decision related to each of item of the business execution, a decision information storage unit 830 that stores decision information of business execution related items to be provided to the management computer 100; a Support group 900 including at least one support terminal 910 and 920 used by expert in the field that is connected to the support computer 700 in a communication means, and providing opinions and expert knowledge each item related to the business execution at the request of the support computer 700; a support participant group 1000 including at least one support participant terminal 1100 and 1200 used by support participants that is connected to the support computer 700 in a communication means, and providing necessary opinions for decision on each item related to business execution based on opinions and expert knowledge on each item related to business execution received from the support group.

The management computer and the support computer may be configured as a server computer that include a web program or computer program for the decision support and a communication means capable of communicating with the terminals. The execution of the web program or application program in the management computer or server computer may be implemented by at least one processor and memory basically provided by the terminals.

The management participant terminal of the management participant group 300, the investor terminal of the investor group 400, the purchase reservation terminal of the purchase reservation group 500, the business executor terminal of the business executor group 600, and the supporter terminal of the supporter group 900 and the support participant terminal of the support participant group 1000 may be configured such that an application program (app) capable of performing each function is mounted and executed or a web program is output to perform a task. Further, above-mentioned terminals may be configured as desktop computers, laptop computers, tablet computers, and mobile communication terminals such as smart phones which may include a communication means capable of communicating with the management computer or support computer and execute web programs or computer application programs provided by the management computer. The execution of the web program or application program in the terminals may be implemented by at least one processor and memory basically provided by the terminals.

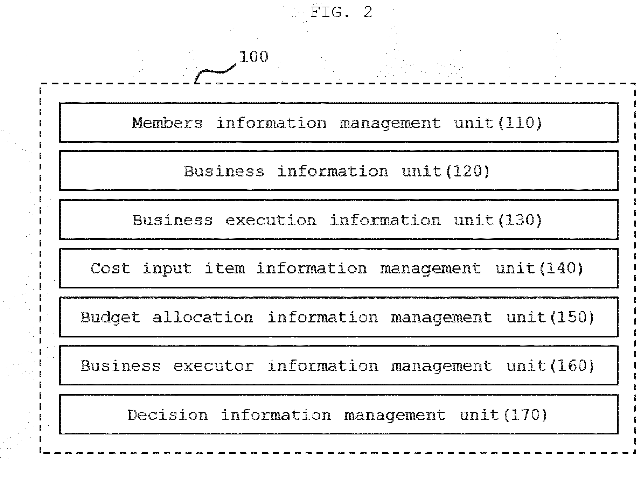

FIG. 2 is a schematic configuration diagram of an example of a management computer which is a main part in the exemplary embodiment of the decision support system of the present invention. As illustrated in FIG. 2, a management computer 100 of the present invention is a configuration including: a member information management unit 110 storing and managing a management participant member information of participants for proposing business information or presenting opinions on various issues related to business execution at the request of the management computer,
an investor member information that conducts investments related to business execution, a purchase contractor member information who made a pre-purchase reservation or purchase contract for the outcome of the business execution, a business executor member information performing the business of each item related to the business execution, a support member information that provides expert opinions and expert knowledge on each item related to business execution, a support participant member information that provides decision data for business performance based on opinions on each item related to business performance presented with reference to expert opinions and expertise provided by supporter members and a terminal information used by the members;
a business information management unit 120 that receives, stores and manages at least one business information proposed by the management participant, support participant, or general public (there is no limit to the project proponent) ; a business execution information management unit 130 that extracts, stores and manages at least one business information selected as an execution target among business information managed by the business information management unit 120; a cost input item information management unit 140 that selects basic item information necessary for business execution related to specific business execution among the business execution information managed by the business execution information management unit 130, and stores and manages a determined cost input item information by collecting the opinions of the management participants, supporters, and support participants in selecting and deciding the targets for the cost input for business execution in relation to the basic item information; a budget allocation information management unit 150 for collecting opinions of the supporters and support participants and determining the budget allocation for each item of the determined cost input item managed by the cost input item information management unit 140 , and for storing and managing the determined budget allocation information; a business executor information management unit 160 that decides selection of business executors for items requiring business executors among the determined cost input items managed by the cost input item information management unit 140, and stores and manages the determined business executors information for each item by collecting the opinions of the management participants, supporters, and support participants; a decision information management unit 170 that stores and manages decision information provided from the support computer 700 that supports the decision of the cost input items, the decision of the budget allocation and the decision of the selection of the business executors.

As described above, a plurality of units, each component of the management computer 100, a web program or a computer program that performs each function of the management computer is stored in a memory provided by the management computer, and the It is a configuration in which at least one hardware processor provided in the management computer executes a program (represented by the configuration of each unit) stored in the memory.

Further, the web program or computer program is stored in the allocated memory of the cloud computer, and the management computer accesses the cloud computer to execute the stored program (expressed in the configuration of each unit) by at least one hardware processor of the management computer.

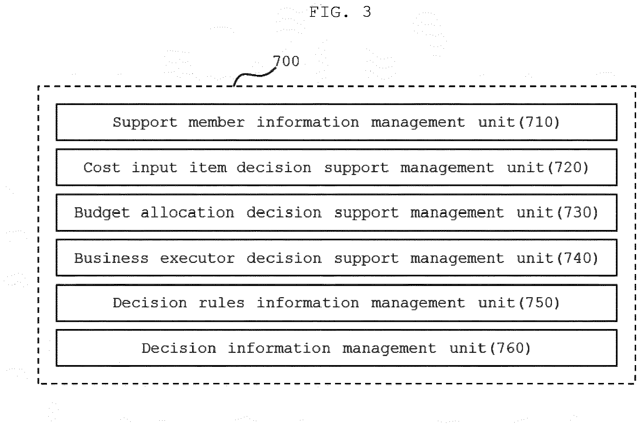

FIG. 3 is a schematic configuration diagram of an example of a support computer which is a main part in the exemplary embodiment of the decision support system of the present invention. As illustrated in FIG. 3, a support computer 700 of the present invention is a configuration including: a support member information management unit 710 that stores and manages information of supporter member information that have an expert knowledge regarding requested the decision, and information of support participant member that provides opinions regarding the decision based on the expert opinion and expert knowledge of the expert members; a cost input item decision support management unit 720 that stores and manages a decision for maintain of the cost input item related to business execution determined by collecting opinions including the opinions and knowledge of expert group and opinions of the support participants in response to a request from the management computer 100 regarding the decision whether to maintain the cost input items; a budget allocation decision support management unit 730 that stores and manages a decision of the budget allocation for each item of the cost input item related to business execution determined by collecting opinions including the opinions and knowledge of expert group and opinions of the support participants, in response to a request from the management computer 100 regarding the budget allocation of the cost input items; a business executor decision support management unit 740 that stores and manages a decision of a selection of the business executor for each item of the cost input item related to business execution determined by collecting opinions including the opinions and knowledge of expert group and opinions of the support participants, in response to a request from the management computer 100 regarding the selection the business executor; a decision rules information management unit 750 that manages the rules information including the reference of decision for the decision of maintain for the cost input items, the decision of the budget allocation for each item and the decision of the selection for the business executors for each item; a decision information management unit 760 that stores information of the decision including the decision of maintain for the cost input items, the decision of the budget allocation for each item and the decision of the selection for the business executors for each item, and provides the information of the decision to the management computer. The configuration of the support computer 700 of the present invention is not limited to the description of the above embodiment, and can be variously changed to achieve the object of the present invention. For example, in the embodiments of the present invention, it has been described that the references and rules applied for decision on each issue are managed by the decision rules information management unit 750. The cost input item decision support management unit 720, the budget allocation decision support management unit 730 and the business executor decision support management unit 740 may be configured to have the applicable references and rules and apply them on their own.

In addition, it has been described that the decision information management unit 760 provides decision information for each issue to the management computer 100. However, the cost input item decision support management unit 720, the budget allocation decision support management unit 730, and the business executor decision support management unit 740 can provide the management computer 100 by itself.

As described above, it is natural that various changes can be made in the range predictable to ordinary skilled person in the art in the description of the embodiments of each component of the present invention.

Hereinafter, the operation of the embodiment of the decision support system of the present invention will be described in detail with reference to FIGS. 1 to 3.

The cost input item information management unit 140 of the management computer 100 receives basic item information that is set as an item for which the cost of business execution is required in connection with the selected business information. Subsequently, when the issues proposed by registered management participants in order to add the basic items related to business execution and to specify the basic items is received, the issues are stored to the cost input item information storage unit 230 of the management content storage unit 200. The cost input item information management unit 140 of the management computer 100 provides a basic item issue information including the predetermined basic items related to the cost input and the issues information without background knowledge and the reference information regarding consent or non-consent and scoring related to the basic item issue information, and requests opinions to the management participant terminals 310 and 320 of the management participant group 300. The cost input item information management unit 140 of the management computer 100 collects number of consent of participants and scores of participants regarding the basic item issue information inputted by the participant terminals 310 and 320 of the management participant group 300. The cost input item information management unit 140 of the management computer 100 determines a basic item issue obtained by the number of consent of the participants and/or scores above the set value as a cost input item for business execution, and stores it to the cost input item information storage unit 230 of the management content storage unit 200. In this case, for example, as a result of collecting opinions of management participants, one issue with the highest number of consent and one issue with the highest average score is selected and stored in the cost input item information storage unit 230, and the issues can be targeted for requests to the support computer 700 for decision. Here, when collecting opinions of the management participant group 300, the opinions of the reference items can be simultaneously investigated to store the investigated data values.

For example, the reference item may be set to 90 as the lower limit of the number of participants who present opinions in the management participant group 300, and 88 as the lower limit of the average value of the assigned scores. When both of the above-mentioned issues satisfy the set reference, or when the next-ranking issue is rejected, priority may be given based on the number of consents of the management participant group 300. As an alternative, if the set references are not met, it can be configured to start over with the proposed issue or re-run within the next n issues (here, 2 issues) . The cost input item information management unit 140 of the management computer 100 provides the information of the cost input item stored in the cost input item information storage unit 230 to the support computer 700, ask for a decision as to whether or not to maintain the cost input items. The cost input item decision support management unit 720 of the support computer 700 provides the information of the cost input item to the supporter terminals 910 and 920 of the supporter group 900 of related experts, and asks for expert opinions on the maintenance of the elected cost input items. The cost input item decision support management unit 720 of the support computer 700 receives the agreement and opposition opinion and detailed description of it regarding the maintenance of the cost input item transmitted from the supporter group 900 and stores these information to the decision storage unit 830 of the support content storage unit 800. The cost input item decision support management unit 720 of the support computer 700 provides the agreement and opposition opinion and detailed description of it regarding the maintenance of the cost input item, the detailed description of it and the reference information for consent or non-consent and scoring to the support participant terminals 1100 and 1200 of the support participant group 1000, and asks for opinions of support participants. The cost input item decision support management unit 720 of the support computer 700 receives the information of consent or non-consent opinion regarding the maintenance of the cost input item and the scores information transmitted from the support participant terminals 1100 and 1200 of the support participant group 1000, and performs a decision as to whether or not to maintain the cost input item, and stores the result data to the decision information storage unit 830.

The budget allocation information management unit 150 of the management computer 100 provides the information of the cost input item stored in the cost input item information storage unit 230 to the support computer 700, ask for a decision for the budget allocation for each item of the cost input items. The budget allocation decision support management unit 730 of the support computer 700 provides the information of the budget allocation for each item of the cost input items to the supporter terminals 910 and 920 of the supporter group 900 of related experts, and asks for expert opinions on the budget allocation for each item. The budget allocation decision support management unit 730 of the support computer 700 receives the agreement and opposition opinion and detailed description of it regarding the budget allocation for each item transmitted from the supporter group 900 and stores these information to the decision storage unit 830 of the support content storage unit 800. The budget allocation decision support management unit 730 of the support computer 700 provides the agreement and opposition opinion and detailed description of it regarding the budget allocation each item, the detailed description of it and the reference information for consent or non-consent and scoring to the support participant terminals 1100 and 1200 of the support participant group 1000, and asks for opinions of support participants. The budget allocation decision support management unit 730 of the support computer 700 receives the information of consent or non-consent opinion regarding the maintenance of the budget allocation for each item of the cost input items and the scores information transmitted from the support participant terminals 1100 and 1200 of the support participant group 1000, and performs a decision regarding budget allocation for each item of the cost input item according to predetermined rules, and stores the result data to the decision information storage unit 830.

In this case, for the decision on the budget allocation for each item, the support participant group 1000 provided with the expert opinion and detailed knowledge information of the supporter group 900, for example, may directly allocate a number for each budget item based on a value of 100, and determine by converging the average value of the numbers assigned for each budget item.

The business executor information management unit 160 of the management computer 100 publicly provides the information of cost input items required by the business executor among the cost input items and the deadline information of the proposed business execution, and receives as an issue proposal, business executor information suitable as the business execution of the cost input item from participants or general public, and stores it to the business executor information storage unit 250 of management content storage unit 200.

The management computer 100 provides, the issue information without background knowledge and the reference information regarding consent or non-consent and scoring related to proposed issues, and requesting opinions of participants based on this information to the management participant terminals 310 and 320 of the management participant group 300.

The business executor information management unit 160 of the management computer 100 collects opinions transmitted from the participant terminals 310 and 320 of the management participant group 300, selects a business executor with the highest number of consents on the issue and a business executor with the highest average score on the issue, and stores information on selected two business executors regarding the selection of the business executor to the business executor information storage unit 250 of management content storage unit 200.

In this case, for example, as a result of collecting opinions of management participants, one issue with the highest number of consent and one issue with the highest average score is selected, and stored the business executor information storage unit 250, and the issues can be targeted for requests to the support computer 700 for decision. Here, when collecting opinions of the management participant group 300, the opinions of the reference items can be simultaneously investigated to store the investigated data values.

For example, the reference item may be set to 90 as the lower limit of the number of participants who present opinions in the management participant group 300, and 88 as the lower limit of the average value of the assigned scores. When both of the above-mentioned issues satisfy the set reference, or when the next-ranking issue is rejected, priority may be given based on the number of consents of the management participant group 300. As an alternative, if the set references are not met, it can be configured to start over with the proposed issue or re-run within the next n issues (here, 2 issues).

The business executor information management unit 160 of the management computer 100 provides information on the issue selected by two business executors to the support computer 700, and asks a decision regarding election of the business executor. The business executor decision support management unit 740 of the support computer 700 provides information on the issue of the selection of the two business executors to the support terminals 910 and 920 of the support group 900, and asks expert opinion for election of the business executor. The business executor decision support management unit 740 of the support computer 700 receives the agreement or opposition opinion and the detailed knowledge data regarding each business executor transmitted by support group 900, and stores the data to the decision storage unit 830 of the support content storage unit 800. The business executor decision support management unit 740 of the support computer 700 provides the opinions of the experts of agreement or opposition and detailed background knowledge about it on each business executor and a reference information regarding consent or non-consent and scoring related to the opinions of the experts of agreement or opposition to the support participant terminals 1100 and 1200 of the support group 1000, and asks opinions of participants based on these information to the participant terminals. The business executor decision support management unit 740 of the support computer 700 receives consent or non-consent information and score information of the participants related to the opinions of the experts of agreement or opposition on each business executor transmitted by the participant terminals 1100 and 1200, and performs the decision for selecting a business executor according to the predetermined rules, and provides the selecting information of the business executor to the management computer 100.

In the above-described embodiment of the present invention, whether to determine whether to maintain the item selected as the cost input item of the business execution, to determine the budget allocation for the items determined by the maintenance of the cost input item, and each cost input item regarding the selection of the business executor, the management computer 100 has been described as requesting their decision to the support computer 700, but is not limited thereto.

Regarding various issues or items required for business execution, for example, for the issues or items for which a certain number of management participants of the management participant group 300 agree to need decision support, the management computer 100 provides the information to the support computer 700 to request decision support.

For example, regarding issues or items that are agreed upon by those who are directly related to business execution, investors in the business or purchaser(reservation) of the outcome of the business execution, and issues or items that are agreed upon by more than a set number of the management group and the support participant group, the management compute 100 can request a decision support to the support computer 700.

The reference information regarding consent or non-consent and scoring for each item provided to the management participant group 300 or the support participant group 1000 may be, for example, information of an presentation of opinion as to whether to consent or non-consent on the provided issue and information such as the number of points to be given based on the highest score of 100.

In addition, the set rules may be set, for example, when the number of consents is 100 or more, or when the average of the scores given by the participants is 85 or more.

In addition, in the embodiment of the present invention, it was described by separating a request for supporting the decision whether to maintain the cost input item of the business execution and a request for supporting decision the budget allocation for each item of the cost input items that the management computer 100 requested to the support computer 700. However, it is not limited to this.

In some cases, there may be a number of non-consent regarding a particular item in relation to the maintenance of the cost input item. In this case, it is not possible to maintain the cost of the item. In this case, the budget allocated to the corresponding item may be configured to be allocated by distributing the ratio of the budget allocated to items maintained as other cost input items.

In addition, although the management participant group 300 and the support participant group 1000 were separately described in the above-described embodiment of the present invention, this is due to the necessity of explaining the role of each step in order to help the understanding of the present invention. In an embodiment of the present invention, the management participant group 300 and the support participant group 1000 may be configured in the same group.

In addition, although the management participant group 300, the investor group 400, the purchase contractor group 500, the business executor group 600, the supporter group 900, and the support participant group 1000 of FIG. 1 are separated, it is not limited to this. These groups can act as integrated groups or separate groups for specific business execution.

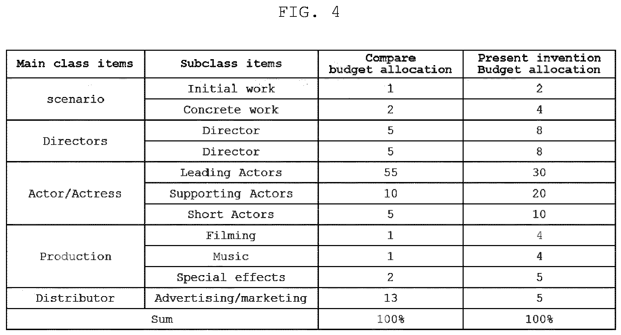

FIG. 4 is an exemplary view for explaining the result of the decision by the support computer, which is a main part of the decision support system of the present invention.

The embodiment of FIG. 4 is for explaining the type of business of the present invention as a movie production.

Referring to FIG. 4, it shows the conventional budget allocation and the conventional method of allocating the budget for each sub-category subdivided into the basic main classification items of scenario, director and director, actor, production and distribution, and the result of the budget allocation changed by the decision support system of the present invention.

According to the example of FIG. 4, it can be seen that the ratio of the budget allocation of the main actor and the budget allocation of the advertisement and marketing among the sub-category items has decreased, and the ratio of the budget allocation of the remaining items has increased. This is a result of considering the reality that the guarantees of other actors are low because the guarantees assigned to the lead actors are unrealistic. In this case, the cast or scheduled lead actor cannot raise a question about the low guarantee. The reason is that all beneficiarys involved in the production of this film are customers. In addition, the lower percentage of budget allocated for advertising and marketing is due to the fact that the budget allocation was too high. It is understood that the cost can be sufficiently lowered because all the participants in the system of the present invention are customers of already produced movies.

Although the decision support system of the present invention is not illustrated, the management computer 100 may further include a profit distribution management unit.

The profit distribution management unit can be configured to be distributed at a predetermined ratio to a business owner, investors, a management participant group, a support participant group, a support group, a purchase reservation group, a management computer and support computer operator in the business when the business execution utilizing the decision support system of the present invention has been successfully performed and revenue has been generated as a result of the business execution. It can be configured to be distributed at a predetermined rate to a group, a supporter group, a purchase reservation group, and a management computer and support computer operator. In addition, information on profit distribution targeted by the management participant group or support participant group can also be determined as the target of profit distribution when certain reference are met.

In this case, the management computer 100 may request the support computer 700 to determine the profit distribution ratio for each beneficiary of the profit distribution. The support computer 700 provides the expert opinion and detailed knowledge information of the supporter group 900 to the support participant group 1000, and collects opinions from the support participant group 1000 to determine profit distribution items by the decision can be provided to the management computer.

In this case, the support participant group 1000 receiving expert opinions and detailed knowledge information of the supporter group 900 directly allocates values for each profit distribution item based on, for example, a value of 100, and can be determined the profit distribution ratio for each beneficiary of profit distribution by converging the average value of the values allocated to each profit distribution item.

In the decision support system of the present invention, issues or items to be decided through collecting the opinions of the support computer 700 may be included issues or items agreed by more than a certain number of a business person, an investor, a purchaser (reservation) of a business outcome or a general participant (management participant group and support participant group), issues related to the finalization of business plans, issues for whether or not it is an essential item that requires intensive investment in costs, issues for profit distribution ratio for each item, and issues for confirmation of settlement of business.

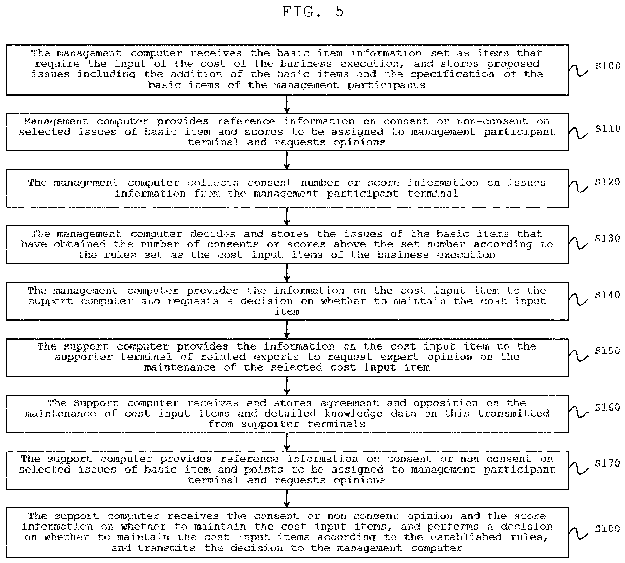

FIG. 5 is a flowchart illustrating an embodiment of the decision support method of the present invention. As illustrated in FIG. 5, a decision support method of the present invention includes steps of: receiving, by a management computer, predetermined information of basic items related to a cost input of business execution, and storing issue when the issue suggested by general participants is received by the management computer to add items related to the business execution and to specify the basic items(S100); providing, by the management computer, a basic item issue information including the basic items and the issue without background knowledge of there and the reference information regarding consent or non-consent and scoring, and requesting opinions of participants based on these information to the participant terminals(S110); collecting, by the management computer, information of number of consent of participants and scores of participants regarding the basic item issue information inputted by the participant terminals(S120); determining and storing, by the management computer, the issue of a basic items obtained by the number of consent of the participants and/or scores above the set value according to a rule set as a cost input item for business execution(S130); providing, by the management computer, information of the cost input item to the support computer, and requesting a decision on whether to maintain the cost input item(S140); providing, by the support computer, the information of the cost input item to the supporter terminals of experts of the supporter group, and requesting an expert opinions regarding maintenance of the selected cost input item(S150); receiving and storing, by the support computer, an agreement and opposition opinion regarding the maintenance of the cost input item transmitted from the supporter group and detailed knowledge data related thereto(S160); providing, by the support computer, the agreement and opposition opinion and detailed description of it regarding the maintenance of the cost input item to the support participant terminals of the support participant group, and requesting the opinions of support participants(S170); receiving, by the support computer, the information of consent or non-consent opinion regarding the maintenance of the cost input item and the scores information transmitted from the support participant terminals of the support participant group, performing a decision on whether to maintain the cost input item according to the predetermined rules and transmitting the result to the management computer(S180).

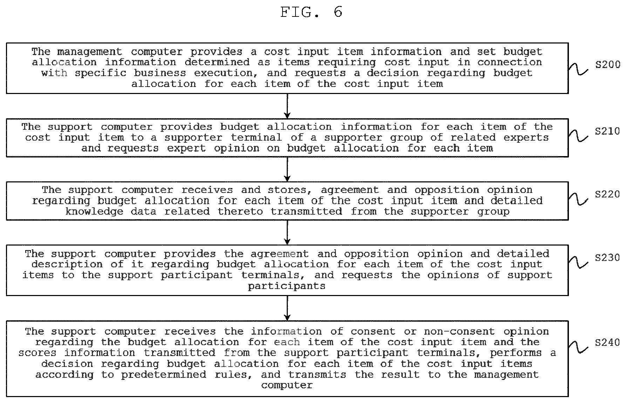

FIG. 6 is a flowchart illustrating another embodiment of the decision support method of the present invention. As illustrated in FIG. 6, a decision support method of the present invention includes steps of: providing, by the management computer, a cost input item information and set budget allocation information determined as items requiring cost input in connection with specific business execution, and requesting a decision regarding budget allocation for each item of the cost input item(S200); providing, a support computer, providing budget allocation information for each item of the cost input item to a supporter terminal of a supporter group of related experts and requesting expert opinion on budget allocation for each item (S210); receiving and storing, the support computer, agreement and opposition opinion regarding budget allocation for each item of the cost input item and detailed knowledge data related thereto transmitted from the supporter group(S220); providing, by the support computer, the agreement and opposition opinion and detailed description of it regarding budget allocation for each item of the cost input items to the support participant terminals of the support participant group, and requesting the opinions of support participants(S230); receiving, by the support computer, the information of consent or non-consent opinion regarding the budget allocation for each item of the cost input item and the scores information transmitted from the support participant terminals of the support participant group, performing a decision regarding budget allocation for each item of the cost input items according to predetermined rules and transmitting the result to the management computer(S240).

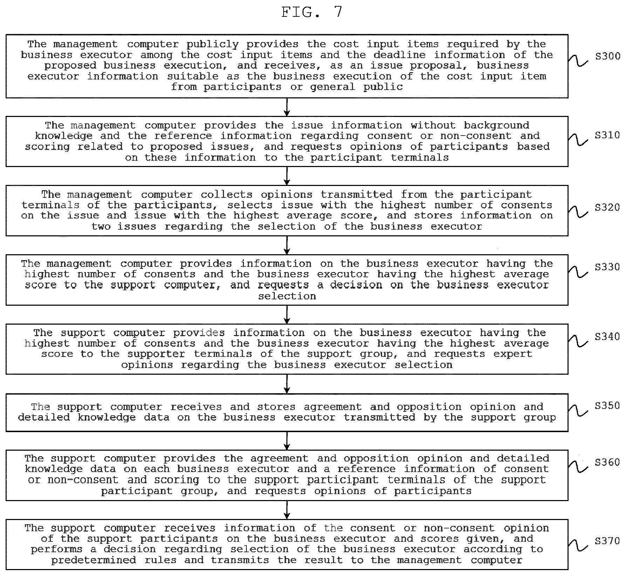

FIG. 7 is a flowchart illustrating another embodiment of the decision support method of the present invention. As illustrated in FIG. 7, a decision support method of the present invention includes steps of: publicly providing, by the management computer, the cost input items required by the business executor among the cost input items and the deadline information of the proposed business execution, and receiving, as an issue proposal, business executor information suitable as the business execution of the cost input item from participants or general public(S300); providing, by the management computer, the issue information without background knowledge and the reference information regarding consent or non-consent and scoring related to proposed issues, and requesting opinions of participants based on these information to the participant terminals(S310); collecting, by the management computer, opinions transmitted from the participant terminals of the participants, selecting issue with the highest number of consents on the issue and issue with the highest average score, and storing information on two issues regarding the selection of the business executor (S320) ; providing, by the management computer, information on the business executor having the highest number of consents and the business executor having the highest average score to the support computer, and requesting a decision on the business executor selection (S330) ; providing, by the support computer, information on the business executor having the highest number of consents and the business executor having the highest average score to the supporter terminals of the support group, and requesting expert opinions regarding the business executor selection (S340) ; receiving and storing, by the support computer, agreement and opposition opinion and detailed knowledge data on the business executor transmitted by the support group(S350); providing, by the support computer, the agreement and opposition opinion and detailed knowledge data on each business executor and a reference information of consent or non-consent and scoring to the support participant terminals of the support participant group, and requesting opinions of participants(S360); and receiving, by the support computer, information of the consent or non-consent opinion of the support participants on the business executor and scores given, and performing a decision regarding selection of the business executor according to predetermined rules and transmitting the result to the management computer(S370).

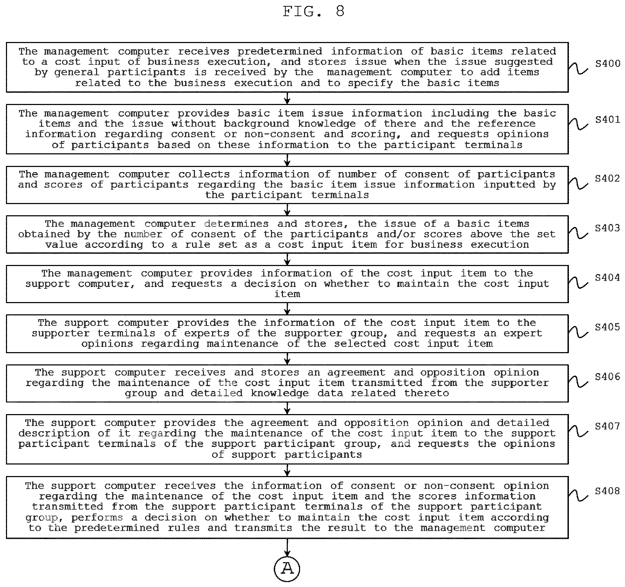

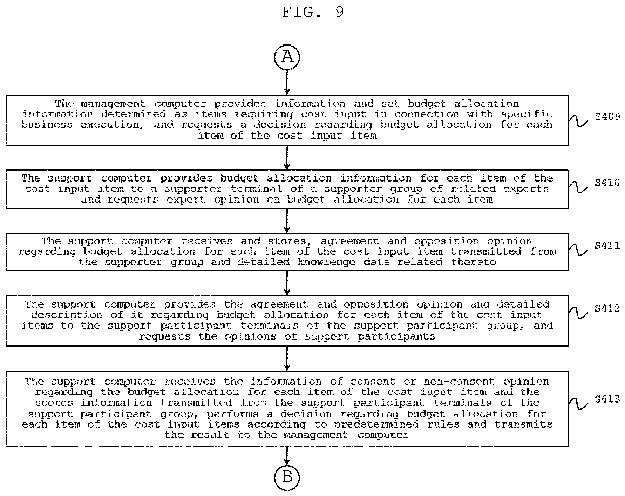

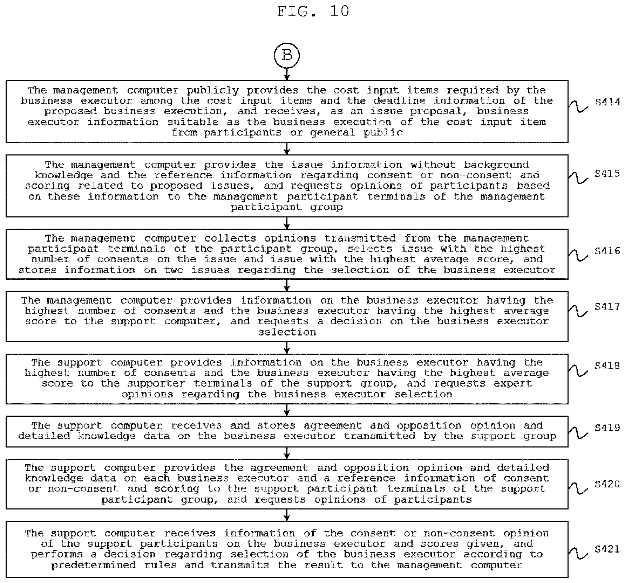

FIG. 8 to FIG. 10 is a flowchart illustrating another embodiment of the decision support method of the present invention. As illustrated in FIG. 8 to FIG. 10, a decision support method of the present invention includes steps of:
receiving, by a management computer, predetermined information of basic items related to a cost input of business execution, and storing issue when the issue suggested by general participants is received by the management computer to add items related to the business execution and to specify the basic items(S400); providing, by the management computer, a basic item issue information including the basic items and the issue without background knowledge of there and the reference information regarding consent or non-consent and scoring, and requesting opinions of participants based on these information to the participant terminals(S401); collecting, by the management computer, information of number of consent of participants and scores of participants regarding the basic item issue information inputted by the participant terminals(S402); determining and storing, by the management computer, the issue of a basic items obtained by the number of consent of the participants and/or scores above the set value according to a rule set as a cost input item for business execution(S403); providing, by the management computer, information of the cost input item to the support computer, and requesting a decision on whether to maintain the cost input item (S404) ; providing, by the support computer, the information of the cost input item to the supporter terminals of experts of the supporter group, and requesting an expert opinions regarding maintenance of the selected cost input item(S405); receiving and storing, by the support computer, an agreement and opposition opinion regarding the maintenance of the cost input item transmitted from the supporter group and detailed knowledge data related thereto (S406) ; providing, by the support computer, the agreement and opposition opinion and detailed description of it regarding the maintenance of the cost input item to the support participant terminals of the support participant group, and requesting the opinions of support participants(S407); receiving, by the support computer, the information of consent or non-consent opinion regarding the maintenance of the cost input item and the scores information transmitted from the support participant terminals of the support participant group, performing a decision on whether to maintain the cost input item according to the predetermined rules and transmitting the result to the management computer(S408); providing, by the management computer, information and set budget allocation information determined as items requiring cost input in connection with specific business execution, and requesting a decision regarding budget allocation for each item of the cost input item(S409); providing, a support computer, budget allocation information for each item of the cost input item to a supporter terminal of a supporter group of related experts and requesting expert opinion on budget allocation for each item (S410); receiving and storing, the support computer, agreement and opposition opinion regarding budget allocation for each item of the cost input item transmitted from the supporter group and detailed knowledge data related thereto (S411) ; providing, by the support computer, the agreement and opposition opinion and detailed description of it regarding budget allocation for each item of the cost input items to the support participant terminals of the support participant group, and requesting the opinions of support participants(S412); receiving, by the support computer, the information of consent or non-consent opinion regarding the budget allocation for each item of the cost input item and the scores information transmitted from the support participant terminals of the support participant group, performing a decision regarding budget allocation for each item of the cost input items according to predetermined rules and transmitting the result to the management computer(S413). publicly providing, by the management computer, the cost input items required by the business executor among the cost input items and the deadline information of the proposed business execution, and receiving, as an issue proposal, business executor information suitable as the business execution of the cost input item from participants or general public(S414); providing, by the management computer, the issue information without background knowledge and the reference information regarding consent or non-consent and scoring related to proposed issues, and requesting opinions of participants based on these information to the management participant terminals of the management participant group(S415); collecting, by the management computer, opinions transmitted from the management participant terminals of the participant group, selecting issue with the highest number of consents on the issue and issue with the highest average score, and storing information on two issues regarding the selection of the business executor(S416); providing, by the management computer, information on the business executor having the highest number of consents and the business executor having the highest average score to the support computer, and requesting a decision on the business executor selection(S417); providing, by the support computer, information on the business executor having the highest number of consents and the business executor having the highest average score to the supporter terminals of the support group, and requesting expert opinions regarding the business executor selection (S418) ; receiving and storing, by the support computer, agreement and opposition opinion and detailed knowledge data on the business executor transmitted by the support group (S419) ; providing, by the support computer, the agreement and opposition opinion and detailed knowledge data on each business executor and a reference information of consent or non-consent and scoring to the support participant terminals of the support participant group, and requesting opinions of participants(S420); and receiving, by the support computer, information of the consent or non-consent opinion of the support participants on the business executor and scores given, and performing a decision regarding selection of the business executor according to predetermined rules and transmitting the result to the management computer(S421).

When the issues for the business execution of the decision support system and method of the present invention is a film production, not only members who have subscribed to the system of the present invention in connection with film production, but also anyone can propose an issue within a set deadline. It is not possible to adopt all of the proposed issues, for example the proposed movie scenarios. Therefore, as a method for limiting to the number of controllable issues, the present invention system allows the management group to freely present agreed or unanimous opinions and scores for the proposed movie scenarios without providing any prior knowledge. Here, the management computer may target the movie scenario with the highest number of consents and the movie scenario with the highest score as a request for decision support. In this case, the management computer can set and present the reference for selecting a movie scenario. For example, a reference for selecting a target for a decision support request can be presented only when the number of consents is 90 or more and the score is 80 or more.

The management computer basically provides the two movie scenarios by providing only the movie scenarios with the highest number of consents and the movie scenarios with the highest scores within the scope of the reference, and requests to select one of the two movie scenarios. In addition, It is possible to request decision support by providing all of the proposed movie scenarios included in the scope of the reference or a set number of movie scenarios to the support computer.

The support computer collects the opinions of the supporter group and the support participant group when there is a request for a decision to select one of the two movie scenarios with the highest number of consents and the average score of the scores given. However, if there are many opposition about the movie scenario and the score is not satisfied, the support computer can make a decision by making a decision on two next movie scenarios.

The exemplary embodiments of the present invention described above are only some of various exemplary embodiments. It is natural that various exemplary embodiments included in the spirit of the present invention are included in the scope of the present invention.

## Claims

1. A system for a decision support including a management computer and a support computer including at least one hardware processor, and a memory storing instructions that, when executed by the at least one processor, cause the system to perform:
providing, by the management computer, a proposed issue information related to a business execution to the support computer, and requesting a decision regarding the issue;
providing, by the support computer, the issue information to at least one expert terminal, and requesting expert opinions regarding the issue;
receiving, by the support computer, expert opinions of agreement and opposition opinion and detailed knowledge on the issue transmitted from at least on expert terminal;
providing, by the support computer, the expert opinions and a reference information for consent and non-consent opinion and scoring on the expert opinions to at least one participant terminal, and requesting opinions of participants;
receiving, by the support computer, opinions of participants including consent and non-consent opinion and scores given from at least one participant terminal, and performing a decision on the issue based on the opinions of participants;
receiving, by management computer, the decision on the issue from the support computer.

2. The system for a decision support of claim 1, wherein the issues are a selection of cost input item related to business execution.

3. The system for a decision support of claim 2, wherein the decision is a decision for maintenance of the cost input item for the business execution.

4. The system for a decision support of claim 1, wherein the issues are a budget allocation for each item of the cost input item related to business execution.

5. The system for a decision support of claim 1, wherein the issues are a selection of business executors for each item of cost input item related to business execution.

6. The system for a decision support of claim 1, further comprising providing predetermined profits to those who participated in the decision of the issue or items.

7. The system for a decision support of claim 1, wherein the decision on the issue is based on the number of consent regarding the expert opinion of the issue and the scores given to it.

8. A decision support method comprising: providing, by the management computer, a proposed issue information related to a business execution to the support computer, and requesting a decision regarding the issue; providing, by the support computer, the issue information to at least one expert terminal, and requesting expert opinions regarding the issue; receiving, by the support computer, expert opinions of agreement and opposition opinion and detailed knowledge on the issue transmitted from at least on expert terminal; providing, by the support computer, the expert opinions and a reference information for consent and non-consent opinion and scoring on the expert opinions to at least one participant terminal, and requesting opinions of participants; receiving, by the support computer, opinions of participants including consent and non-consent opinion and scores given from at least one participant terminal, and performing a decision on the issue based on the opinions of participants; receiving, by management computer, the decision on the issue from the support computer.

9. The decision support method of claim 8, wherein the issues are a selection of cost input item related to business execution.

10. The decision support method of claim 8, wherein the decision is a decision for maintenance of the cost input item for the business execution.

11. The decision support method of claim 8, wherein the issues are a budget allocation for each item of the cost input item related to business execution.

12. The decision support method of claim 8, wherein the issues are a selection of business executors for each item of cost input item related to business execution.

13. The decision support method of claim 8, further comprising providing predetermined profits to those who participated in the decision of the issue or items.

14. The decision support method of claim 8, wherein the decision on the issue is based on the number of consent regarding the expert opinion of the issue and the scores given to it.

15. The decision support method comprising: receiving, by a management computer, predetermined information of basic items related to a cost input of business execution, and storing issue when the issue suggested by general participants is received by the management computer to add items related to the business execution and to specify the basic items; providing, by the management computer, a basic item issue information including the basic items and the issue without background knowledge of there and the reference information regarding consent or non-consent and scoring, and requesting opinions of participants based on these information to the participant terminals; collecting, by the management computer, information of number of consent of participants and scores of participants regarding the basic item issue information inputted by the participant terminals; determining and storing, by the management computer, the issue of a basic items obtained by the number of consent of the participants and/or scores above the set value according to a rule set as a cost input item for business execution; providing, by the management computer, information of the cost input item to the support computer, and requesting a decision on whether to maintain the cost input item; providing, by the support computer, the information of the cost input item to the supporter terminals of experts of the supporter group, and requesting an expert opinions regarding maintenance of the selected cost input item; receiving and storing, by the support computer, an agreement and opposition opinion regarding the maintenance of the cost input item transmitted from the supporter group and detailed knowledge data related thereto; providing, by the support computer, the agreement and opposition opinion and detailed description of it regarding the maintenance of the cost input item to the support participant terminals of the support participant group, and requesting the opinions of support participants; receiving, by the support computer, the information of consent or non-consent opinion regarding the maintenance of the cost input item and the scores information transmitted from the support participant terminals of the support participant group, performing a decision on whether to maintain the cost input item according to the predetermined rules and transmitting the result to the management computer; providing, by the management computer, information and set budget allocation information determined as items requiring cost input in connection with specific business execution, and requesting a decision regarding budget allocation for each item of the cost input item; providing, a support computer, budget allocation information for each item of the cost input item to a supporter terminal of a supporter group of related experts and requesting expert opinion on budget allocation for each item; receiving and storing, the support computer, agreement and opposition opinion regarding budget allocation for each item of the cost input item transmitted from the supporter group and detailed knowledge data related thereto; providing, by the support computer, the agreement and opposition opinion and detailed description of it regarding budget allocation for each item of the cost input items to the support participant terminals of the support participant group, and requesting the opinions of support participants; receiving, by the support computer, the information of consent or non-consent opinion regarding the budget allocation for each item of the cost input item and the scores information transmitted from the support participant terminals of the support participant group, performing a decision regarding budget allocation for each item of the cost input items according to predetermined rules and transmitting the result to the management computer; publicly providing, by the management computer, the cost input items required by the business executor among the cost input items and the deadline information of the proposed business execution, and receiving, as an issue proposal, business executor information suitable as the business execution of the cost input item from participants or general public; providing, by the management computer, the issue information without background knowledge and the reference information regarding consent or non-consent and scoring related to proposed issues, and requesting opinions of participants based on these information to the management participant terminals of the management participant group; collecting, by the management computer, opinions transmitted from the management participant terminals of the participant group, selecting issue with the highest number of consents on the issue and issue with the highest average score, and storing information on two issues regarding the selection of the business executor; providing, by the management computer, information on the business executor having the highest number of consents and the business executor having the highest average score to the support computer, and requesting a decision on the business executor selection; providing, by the support computer, information on the business executor having the highest number of consents and the business executor having the highest average score to the supporter terminals of the support group, and requesting expert opinions regarding the business executor selection; receiving and storing, by the support computer, agreement and opposition opinion and detailed knowledge data on the business executor transmitted by the support group; providing, by the support computer, the agreement and opposition opinion and detailed knowledge data on each business executor and a reference information of consent or non-consent and scoring to the support participant terminals of the support participant group, and requesting opinions of participants; and receiving, by the support computer, information of the consent or non-consent opinion of the support participants on the business executor and scores given, and performing a decision regarding selection of the business executor according to predetermined rules and transmitting the result to the management computer.
